# FASCICULE DE BREVET EUROPEEN

(11) **EP 3 055 186 B1**
(45) Date de publication et mention de la délivrance du brevet: **03.01.2018**
(21) Numéro de dépôt: 14789325.9
(22) Date de dépôt: 03.10.2014
(51) Int. Cl.: B62D 3/12, B62D 21/11

(54) **BERCEAU MODULAIRE POUR TRAIN ROULANT DE VÉHICULE COMPRENANT UNE EMBASE TRANSVERSE RECEVANT UN CARTER DE DIRECTION FRACTIONNÉ ALLÉGÉ**
MODULARE AUFLAGE FÜR EINEN FAHRZEUGANTRIEBSSTRANG MIT EINER TRANSVERSALEN BASIS ZUR AUFNAHME EINES LEICHTEN GETEILTEN LENKUNGSGEHÄUSES
MODULAR CRADLE FOR A VEHICLE DRIVE TRAIN COMPRISING A TRANSVERSE BASE RECEIVING A LIGHTWEIGHT SPLIT STEERING HOUSING

(30) Priorité: 10.10.2013 FR 1359851
(43) Date de publication de la demande: 17.08.2016
(73) Titulaire: JTEKT Europe, 69540 Irigny (FR)
(72) Inventeur: DIEUDONNE, Nicolas, F-69600 Oullins (FR); CHAPEL, Vivien, F-69005 Lyon (FR); REY, Laurent, F-69100 Villeurbanne (FR); PLATARET, Nicolas, F-69630 Chaponost (FR); VADON, Raphaël, F-69008 Lyon (FR); FILIPE, Charly, F-69007 Lyon (FR); SOHAR, Johann, F-69360 Sérézin du Rhône (FR)
(74) Mandataire: Chevalier, Renaud Philippe
(86) Numéro de dépôt international: PCT/FR2014/052514
(87) Numéro de publication internationale: WO 2015/052415

(56) Documents cités:
- WO-A2-2009/051026
- DE-A1-102011 115 387
- DE-A1-102011 120 126
- FR-A1- 2 986 489
- US-A1- 2013 074 621

## Description

La présente invention concerne le domaine technique général des trains roulants de véhicules automobiles, et plus particulièrement le domaine des berceaux qui sont destinés à être fixés au châssis du véhicule pour soutenir les organes de tels trains roulants, organes parmi lesquels on compte les essieux, les organes de suspension, et, dans le cas de trains roulants directeurs, c'est-à-dire pourvus de roues directrices, certains organes de direction tels qu'un carter de direction dans lequel peut coulisser une crémaillère de direction.

Afin d'assurer une rigidité fonctionnelle suffisante du berceau et du châssis qui reçoit ledit berceau, mais également afin de limiter le nombre d'opérations de fabrication, il est connu d'utiliser des berceaux métalliques monolithiques, qui intègrent d'un seul tenant l'embase du berceau et le carter de direction, et qui peuvent être obtenus par exemple par fonderie.

Or, de tels berceaux, en raison de leur caractère massif, sont relativement lourds et encombrants, ce qui peut compliquer leur manipulation lors des opérations d'assemblage.

En outre, leur poids peut pénaliser les performances du véhicule, notamment en matière de tenue de route, d'agrément de conduite, et de consommation de carburant.

Enfin, l'importante quantité de matière nécessaire à la réalisation de tels berceaux tend à accroître le coût de fabrication de ces derniers, ainsi que la quantité d'énergie nécessaire à ladite fabrication.

Le document WO-2009/051026 décrit un procédé d'assemblage d'un berceau pour essieu directeur d'un véhicule, ledit procédé comprenant une étape de préfabrication au cours de laquelle on réalise une embase qui comprend une zone d'arrimage gauche conçue pour être fixée à un élément de châssis gauche du véhicule, une zone d'arrimage droite conçue pour être fixée à un élément de châssis droit du véhicule, une traverse qui joint la zone d'arrimage gauche à la zone d'arrimage droite, ainsi qu'une zone de réception gauche et une zone de réception droite distantes l'une de l'autre et destinées à offrir chacune un appui à un carter de direction conçu pour recevoir et guider en translation une crémaillère de direction.

Le document susmentionné décrit également un carter de direction selon le préambule de la revendication 15.

Les objets assignés à l'invention visent par conséquent à remédier aux inconvénients susmentionnés et à proposer un nouvel agencement de berceau porte-essieu qui soit relativement léger, tout en présentant une excellente robustesse et une bonne rigidité fonctionnelle, et dont l'assemblage soit facile, rapide et peu onéreux.

Les objets assignés à l'invention sont atteints au moyen d'un procédé d'assemblage d'un berceau pour essieu directeur d'un véhicule, ledit procédé étant caractérisé en ce qu'il comporte :
une étape (a) de préfabrication, au cours de laquelle on réalise séparément :
   - une embase, qui comprend une zone d'arrimage gauche conçue pour être fixée à un élément de châssis gauche du véhicule, une zone d'arrimage droite conçue pour être fixée à un élément de châssis droit du véhicule, une traverse qui joint la zone d'arrimage gauche à la zone d'arrimage droite, ainsi qu'une zone de réception gauche et une zone de réception droite distantes l'une de l'autre et destinées à offrir chacune un appui à un carter de direction conçu pour recevoir et guider en translation une crémaillère de direction,
   - un premier module, distinct de l'embase, qui comprend d'une part un premier tronçon de carter de direction destiné à offrir une première portée de guidage à la crémaillère, ainsi qu'un premier palier qui est solidaire dudit premier tronçon de carter de direction et qui forme une première dépression agencée pour pouvoir accueillir et soutenir une barre stabilisatrice,
   - un second module, distinct de l'embase et du premier module, ledit second module comprenant d'une part un second tronçon de carter de direction destiné à offrir une seconde portée de guidage à la crémaillère, et d'autre part un second palier, solidaire dudit second tronçon de carter de direction, ledit second palier formant une seconde dépression agencée pour pouvoir accueillir et soutenir la barre stabilisatrice,
puis une étape (b) d'assemblage, au cours de laquelle on rapporte et l'on fixe d'une part le premier module sur la zone de réception gauche de l'embase, et d'autre part le second module droit sur la zone de réception droite de ladite embase.

Avantageusement, en conférant au berceau conforme à l'invention un caractère modulaire, c'est-à-dire en subdivisant ledit berceau en une pluralité de pièces élémentaires (premier module, second module, embase) relativement légères, qui peuvent être préfabriquées et approvisionnées séparément, avant d'être assemblées (de préférence de manière réversible), on peut décomposer et simplifier les opérations individuelles de fabrication et d'assemblage dudit berceau.

En particulier, en évitant d'utiliser d'emblée une pièce massive unique, on simplifie le stockage, le transport et la manipulation du berceau, et de ses composants, sur la ligne de fabrication et aux abords de celle-ci.

Le cas échéant, l'embase pourra même servir directement de support de montage et de transport des pièces, remplaçant ainsi une palette, et permettant par conséquent de simplifier l'outillage d'approvisionnement de la ligne de production.

Bien entendu, cette structure modulaire présente d'autres avantages en matière de gestion de production.

Ainsi, il est notamment possible de fabriquer et d'approvisionner les différentes pièces élémentaires (modules et embase) en temps masqué, ce qui confère une certaine souplesse à la production.

En outre, il devient possible de contrôler individuellement lesdites pièces élémentaires avant l'assemblage, ce qui minimise le risque de découverte tardive, à un stade avancé de la production, d'un défaut de fabrication.

De même, l'interchangeabilité des pièces élémentaires permet d'envisager, en cas de nécessité, un remplacement de la pièce défectueuse, ce qui évite une mise au rebut coûteuse d'un berceau complet fini ou quasi-fini.

Par ailleurs, le caractère modulaire du berceau conforme à l'invention permet de répartir et d'organiser plus efficacement les différentes fonctions dudit berceau, et par conséquent d'optimiser les formes, dimensions, masses, et choix des matériaux constitutifs des pièces élémentaires dévolues à chacune de ces fonctions, ou à chaque groupe de fonctions.

Ainsi, le premier module, respectivement le second module, pourront grouper, chacun de son côté respectif, au sein d'une même entité, qui sera de préférence entièrement réalisée d'un seul tenant dans un même matériau, plusieurs fonctions, en l'espèce une fonction de réception et de guidage de la crémaillère de direction, grâce à leur tronçon de carter, et une fonction d'accueil et de maintien, notamment de maintien radial, de la barre stabilisatrice (barre « antiroulis » ou « anti-dévers ») qui équipe le train roulant, grâce à leur palier de barre stabilisatrice.

Avantageusement, on pourra ainsi regrouper au sein d'un même module, pourtant relativement compact et léger, plusieurs (en l'espèce deux) fonctions distinctes.

Une telle solution facilitera l'intégration desdites fonctions au sein du berceau, notamment en simplifiant le positionnement (précis et reproductible) et la fixation ultérieurs, sur le premier et le second module, des différents organes mécaniques assurant ces fonctions, parmi lesquels, en l'occurrence, d'une part la barre stabilisatrice assurant la fonction antiroulis, qui vient se loger dans le palier du module considéré, et d'autre part la crémaillère, les biellettes et les soufflets assurant la fonction de commande de direction, qui sont accueillis par le tronçon de carter dudit module.

De surcroît, on pourra différencier la nature des matériaux constitutifs des pièces élémentaires (premier et second module, embase) et/ou le dimensionnement desdites pièces élémentaires selon les exigences mécaniques liées à la, ou aux fonctions qui leur sont propres, de telle sorte qu'il devient possible de réduire l'encombrement desdites pièces élémentaires et/ou d'alléger lesdites pièces élémentaires, et par conséquent le berceau, en évitant tout emploi superflu de matière.

Ainsi, plus particulièrement, et tel que cela sera détaillé par la suite, on pourra de préférence faire supporter l'essentiel des contraintes mécaniques de structure liées à la tenue du châssis, et plus particulièrement les contraintes de flexion verticale, de torsion horizontale, ou de compression latérale en rapprochement, par l'embase, et plus particulièrement par sa traverse, ladite embase pouvant à cet effet être formée par une pièce métallique massive et particulièrement robuste, tandis que les premier et second modules, et plus particulièrement leurs tronçons de carter respectifs, pourront être réalisés sous une forme compacte, fine, et le cas échéant dans des matériaux légers de type matériaux composite, selon une configuration juste nécessaire et suffisante pour assurer les fonctions de guidage, de lubrification et de protection (à l'encontre de la poussière ou des projections d'eau, entre autres) de la crémaillère.

En d'autres termes, la rigidité structurelle du berceau peut ainsi, grâce au caractère modulaire de l'invention, être assurée principalement voire exclusivement par l'embase, le carter de direction pouvant quant à lui être allégé du fait qu'il n'est pas nécessaire de prévoir une contribution dudit carter de direction à ladite rigidité structurelle du berceau, dès lors qu'une telle contribution qui serait en effet inutilement redondante avec celle de l'embase elle-même.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble du dessus en perspective éclatée, l'assemblage d'un berceau selon l'invention.
La figure 2 illustre, selon une vue d'ensemble du dessus en perspective assemblée, le berceau de la figure 1 obtenu par le procédé conforme à l'invention.
Les figures 3, 4 et 5 illustrent, respectivement selon des vues en projection de dessus, en projection de côté (vue depuis la gauche), et en perspective, un exemple de réalisation de premier module conforme à l'invention, utilisé sur l'assemblage des figures 1 et 2.
Les figures 6, 7 et 8 illustrent, respectivement selon des vues en projection de dessus, en perspective, et en projection de côté (vue depuis la droite), un exemple de réalisation de second module conforme à l'invention, complémentaire du premier module et utilisé sur l'assemblage des figures 1 et 2.

La présente invention concerne un procédé d'assemblage d'un berceau 1 pour essieu directeur d'un véhicule, et plus particulièrement d'un véhicule automobile.

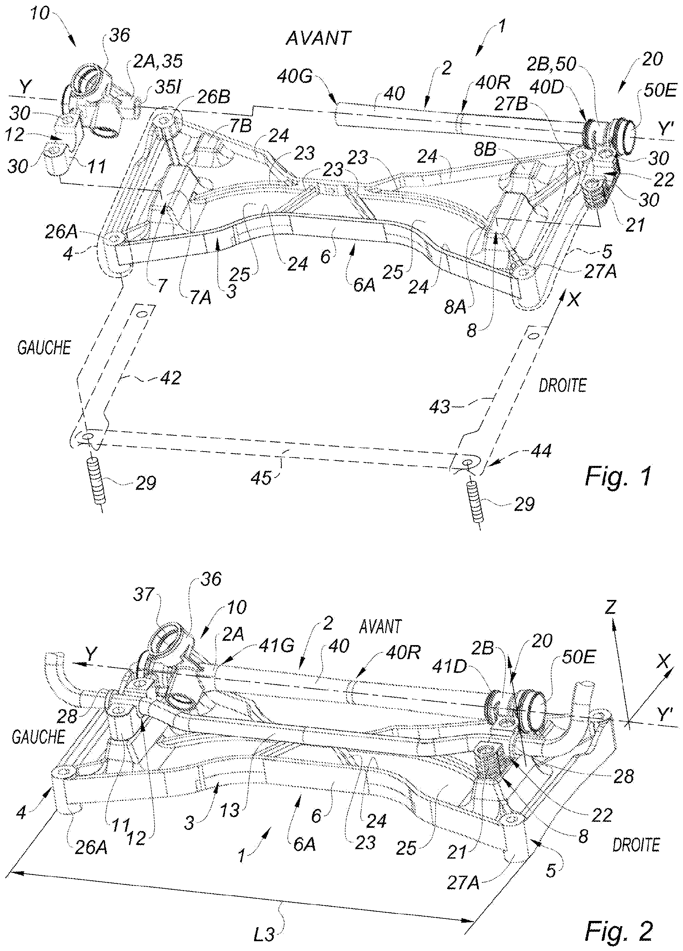

Le berceau 1 est destiné à venir se fixer au châssis 44 du véhicule (schématisé en pointillés sur la figure 1), et plus particulièrement à un longeron gauche 42 d'une part et à un longeron droit 43 d'autre part.

Tel que cela est illustré sur la figure 1, lesdits longerons 42, 43 du châssis s'étendent en saillie de la caisse en blanc 45 du véhicule (ici ébauchée en pointillés par une traverse inférieure sur ladite figure 1), le berceau 1 venant former une sorte de pont entre lesdits longerons 42, 43.

De préférence, ledit berceau 1 viendra se loger sous le groupe motopropulseur, sensiblement à l'aplomb de ce dernier.

Par convention et par simple commodité de description, on notera « X » la direction de marche, sensiblement horizontale, correspondant à l'axe longitudinal arrière-avant du véhicule, « Z » la direction verticale, et « Y » la direction latérale transverse droite-gauche, sensiblement horizontale, du véhicule.

Par simple commodité de description, on désignera par « gauche » un élément situé du côté correspondant à la moitié gauche du véhicule, et plus particulièrement du berceau 1, en référence au sens de marche avant, et par « droit » un élément situé du côté opposé, par rapport au plan sagittal (plan longitudinal médian) du véhicule et du berceau, c'est-à-dire situé du côté correspondant à la moitié droite dudit véhicule, et plus particulièrement à la moitié droite dudit berceau 1.

Le berceau 1 est destiné à porter le ou les essieux qui soutiennent respectivement au moins une roue directrice gauche et au moins une roue directrice droite du train roulant concerné, ledit train roulant constituant de préférence un train avant.

De préférence, les roues directrices du train roulant forment également des roues motrices.

Le berceau 1 et/ou, de préférence, les longerons 42, 43 peuvent en outre servir de support aux bras (ou triangles) de suspension desdites roues.

Ledit berceau 1 est également conçu pour offrir un support à un carter de direction 2, conçu pour guider en translation, selon un axe directeur (YY'), un organe actionneur de direction (non représenté), tel qu'une crémaillère de direction.

L'axe directeur (YY') correspond de préférence à l'axe selon lequel la crémaillère, et plus globalement le carter de direction 2, s'étendent en longueur (c'est-à-dire selon leur plus grande dimension).

En outre, de façon préférentielle, et par commodité de description, ledit axe directeur (YY') sera avantageusement considéré comme confondu avec la direction latérale transverse Y du véhicule.

De façon connue en soi, l'organe actionneur de direction, qui, par commodité de description, pourra être assimilé à une crémaillère dans ce qui suit, est monté mobile et guidé en translation dans le carter 2 de sorte à pouvoir déplacer des biellettes de direction qui sont fixées à chacune de ses extrémités et qui sont raccordées chacune à un support orientable en lacet, tel qu'un porte-fusée, lequel porte la roue directrice (gauche ou droite) correspondante. De la sorte, le conducteur peut modifier comme il le souhaite l'angle de braquage desdites roues directrices.

Ladite crémaillère est avantageusement entraînée en déplacement par une colonne de direction, contrôlée par un volant de conduite, et dont l'extrémité est pourvue d'un pignon qui vient en prise avec ladite crémaillère.

Le dispositif de direction peut être manuel, ou bien de préférence complété par un moteur d'assistance, par exemple hydraulique ou bien encore électrique, qui vient en prise soit sur la colonne de direction, soit directement sur la crémaillère, afin d'appliquer, selon des lois d'assistance prédéterminées, un couple d'assistance qui assiste le conducteur lors de la manoeuvre de la direction.

Bien entendu, le berceau 1 pourra servir de support à d'autres organes, par exemple à des éléments de la ligne d'échappement, tels qu'un filtre à particules.

A ce titre, le berceau 1 pourra avantageusement être polyvalent et comporter, en standard, différentes interfaces de fixation que le constructeur automobile pourra librement choisir d'équiper ou non avec les organes correspondants, en fonction des besoins.

A titre d'exemple, le berceau 1 pourra ainsi prévoir une interface de fixation pour filtre à particules, ladite interface étant destinée soit à recevoir un filtre à particules, dans le cas où le berceau équipe un véhicule diesel, soit à rester libre dans le cas où ce même berceau 1 équipe un véhicule à essence.

Selon l'invention, le procédé d'assemblage du berceau 1 comprend tout d'abord une étape (a) de préfabrication, au cours de laquelle on réalise séparément :
- une embase 3, qui comprend, tel que cela est illustré sur les figures 1 et 2, une zone d'arrimage gauche 4 conçue pour être fixée à un élément de châssis gauche du véhicule (tel que le longeron gauche 42 susmentionné), une zone d'arrimage droite 5 conçue pour être fixée à un élément de châssis droit du véhicule (tel que le longeron droit 43), une traverse 6 qui joint la zone d'arrimage gauche 4 à la zone d'arrimage droite 5, ainsi qu'une zone de réception gauche 7 et une zone de réception droite 8 distantes l'une de l'autre et destinées à offrir chacune un appui à un carter de direction 2 conçu pour recevoir et guider en translation une crémaillère de direction,
- un premier module 10, distinct de l'embase 3, qui comprend d'une part un premier tronçon 2A de carter de direction 2 destiné à offrir une première portée de guidage à la crémaillère, ainsi qu'un premier palier 11 (pour barre stabilisatrice) qui est solidaire dudit premier tronçon 2A de carter de direction et qui forme une première dépression 12 agencée pour pouvoir accueillir et soutenir une barre stabilisatrice 13,
- un second module 20, distinct de l'embase 3 et du premier module 10, ledit second module 20 comprenant d'une part un second tronçon 2B de carter de direction 2 destiné à offrir une seconde portée de guidage à la crémaillère, et d'autre part un second palier 21 (pour barre stabilisatrice), solidaire dudit second tronçon de carter de direction, ledit second palier 21 formant une seconde dépression 22 agencée pour pouvoir accueillir et soutenir la barre stabilisatrice.

Selon l'invention, le procédé comporte ensuite une étape (b) d'assemblage, au cours de laquelle on rapporte et l'on fixe d'une part le premier module 10 (ici, un module gauche) sur la zone de réception gauche 7 de l'embase 3, et d'autre part le second module 20 (ici, un module droit) sur la zone de réception droite 8 de ladite embase 3.

Avantageusement, le fractionnement du berceau 1, et plus particulièrement du carter de direction 2, en plusieurs pièces élémentaires, relativement légères, en l'occurrence d'une part une embase 3 et d'autre part au moins un premier module 10 et un second module 20, complémentaires l'un de l'autre, et qui offrent chacun à la fois une portion du carter de direction 2 et un palier 11, 21 de support pour la barre stabilisatrice 13, permet de faciliter l'approvisionnement et la manipulation des différents composants du berceau 1 lors de la fabrication et de l'assemblage de ce dernier, en évitant d'avoir à former d'un seul tenant une pièce massive et particulièrement lourde.

Ce fractionnement permet en outre d'adapter les dimensions et matériaux constitutifs des différentes pièces élémentaires 3, 10, 20 en fonction de leur rôle, et plus particulièrement des contraintes auxquelles elles seront soumises lors de l'utilisation du véhicule, ce qui permet de limiter au plus juste la quantité de matière utilisée, et par conséquent de réduire la masse et le coût du berceau 1.

L'embase 3 est avantageusement destinée à former l'infrastructure rigide porteuse du berceau 1, et prend de préférence la forme d'un plateau inférieur sur lequel, et plus particulièrement sur la face supérieure duquel, viennent se monter, entre autres, les premier et second modules 10, 20.

La traverse 6 de ladite embase 3, qui s'étend de préférence sensiblement parallèlement à l'axe directeur (YY'), depuis la zone d'arrimage gauche 4 jusqu'à la zone d'arrimage droite 5, forme avantageusement une structure sensiblement incompressible et inextensible (notamment par comparaison avec le carter de direction 2), de type entretoise, qui s'oppose efficacement au rapprochement en compression ou à l'écartement en traction du berceau 1 selon ledit axe directeur (YY').

La traverse 6, et plus globalement l'embase 3 est en outre avantageusement conçue pour résister efficacement à la flexion (verticale), ainsi qu'à la torsion autour de l'axe directeur (YY'), afin de limiter la flexibilité du berceau 1, et plus globalement du châssis du véhicule.

A cet effet, l'embase 3 présentera de préférence des nervures de renfort 23 et/ou des rebords redressés 24, qui peuvent prendre appui sur une plaque d'âme 25 pleine, de préférence sensiblement horizontale.

De préférence, afin de rester légère tout en procurant une bonne assise de fixation, stable et robuste, au châssis, l'embase 3 pourra prendre sensiblement une forme en « ailes de papillon », la traverse 6 présentant à cet effet un resserrement central 6A, et allant en s'élargissant (c'est-à-dire en augmentant sa dimension selon la direction de marche X) au niveau de chaque zone d'arrimage 4, 5, tel que cela est notamment visible sur les figures 1 et 2.

De préférence, l'embase 3 est formée par un plateau monolithique en alliage métallique léger, tel qu'un alliage d'aluminium ou de magnésium.

L'embase 3 pourra ainsi concilier une bonne rigidité fonctionnelle avec un poids relativement modéré.

Par « alliage léger », on désigne, de manière conventionnelle, un alliage moins dense (plus léger) que l'acier, et de préférence de densité inférieure à 4, voire inférieure à 3.

Une telle embase 3, qui pourra par ailleurs être de forme relativement simple, tel que cela a été décrit plus haut, sera de préférence réalisée à moindre coût par un procédé de fonderie, de type moulage sous pression ou bien moulage gravitaire.

Chaque zone d'arrimage 4, 5 de ladite embase 3 est bien entendu aménagée de sorte à permettre une fixation au châssis 44, de préférence réversible, et par exemple par boulonnage, au moyen d'attaches 29 tels que vis ou goujons.

A ce titre, chaque zone d'arrimage 4, 5 comporte au moins un organe de fixation 26A, 26B, respectivement 27A, 27B, et de préférence plusieurs (par exemple deux) organes de fixation 26A, 26B, 27A, 27B, tels que des canons (ici sensiblement verticaux), qui procurent au moins un point d'ancrage du berceau 1 au châssis, respectivement (et préférentiellement) plusieurs points d'ancrage du berceau 1 au châssis, lesdits points d'ancrage étant avantageusement étagés longitudinalement selon la direction de marche X, et plus particulièrement le long de chaque longeron 42, 43, tel que cela est notamment visible sur la figure 1.

Avantageusement, il sera possible d'utiliser une même attache 29, tel qu'un goujon, pour fixer d'une part le berceau 1, et plus particulièrement l'embase 3, aux longerons 42, 43, et d'autre part relier lesdits longerons 42, 43 à des éléments de carrosserie de la caisse en blanc 45, par exemple à une traverse inférieure.

A titre d'exemple, en référence à la figure 1, on pourra utiliser un même goujon 29, traversant le canon 26A, pour fixer ensemble à la fois la zone d'arrimage gauche 4, le longeron gauche 42 et la portion gauche de la caisse en blanc 45.

Il en ira de même, *mutatis mutandis,* du côté droit, pour le goujon 29 engagé dans le canon 27A et ainsi partagé par la zone d'arrimage droite 5, le longeron droit 43 et la portion droite de la caisse en blanc 45.

Un tel partage des organes de fixation 29 permet avantageusement d'obtenir un agencement compact, qui limite l'encombrement et le poids du berceau 1, tout en simplifiant son assemblage.

Par ailleurs, les deux zones de réception gauche 7 et droite 8 seront de préférence contenues latéralement, c'est-à-dire le long de l'axe directeur (YY'), entre les zones d'arrimage gauche 4 et droite 5, de sorte à limiter l'encombrement du berceau 1.

Tel que cela est visible sur la figure 1, la zone de réception gauche 7 et/ou la zone de réception droite 8 se présenteront de préférence (chacune) sous la forme d'un ou plusieurs bossage(s) 7A, 7B, respectivement 8A, 8B, de préférence sensiblement plan(s) (par simplicité de fabrication et d'assemblage), qui font saillie sur la plaque d'âme 25, et sur lesquels viendra s'appliquer, de préférence directement, tel que cela est illustré sur la figure 2, le module 10, 20 correspondant.

Les paliers 11, 21 des premier module 10 et second module 20 respectivement seront quant à eux avantageusement agencés pour fournir à la barre stabilisatrice 13 au moins deux appuis distants selon l'axe directeur (YY'), à savoir une portée gauche et une portée droite, au sein desquels ladite barre stabilisatrice 13 pourra tourillonner (ici en tangage) afin d'accommoder sa torsion élastique lorsqu'elle s'oppose à la prise de roulis du châssis.

A ce titre, tel que cela est illustré sur les figures, la première et/ou la seconde dépression 12, 22 se présenteront de préférence sous la forme d'un logement en U, de préférence ouvert sur le dessus, apte à recevoir la barre stabilisatrice 13, soit directement à nu, soit par l'intermédiaire de douilles autorisant au moins un degré de rotation en pivot.

De telles douilles pourront se présenter sous forme de roulements (à billes, à aiguilles ou à rouleaux), ou, de préférence, de coussinets lisses favorisant le glissement, et, plus particulièrement, de paliers en élastomère assurant à la fois le guidage de la barre stabilisatrice 13 et un amortissement des chocs (filtrage des secousses).

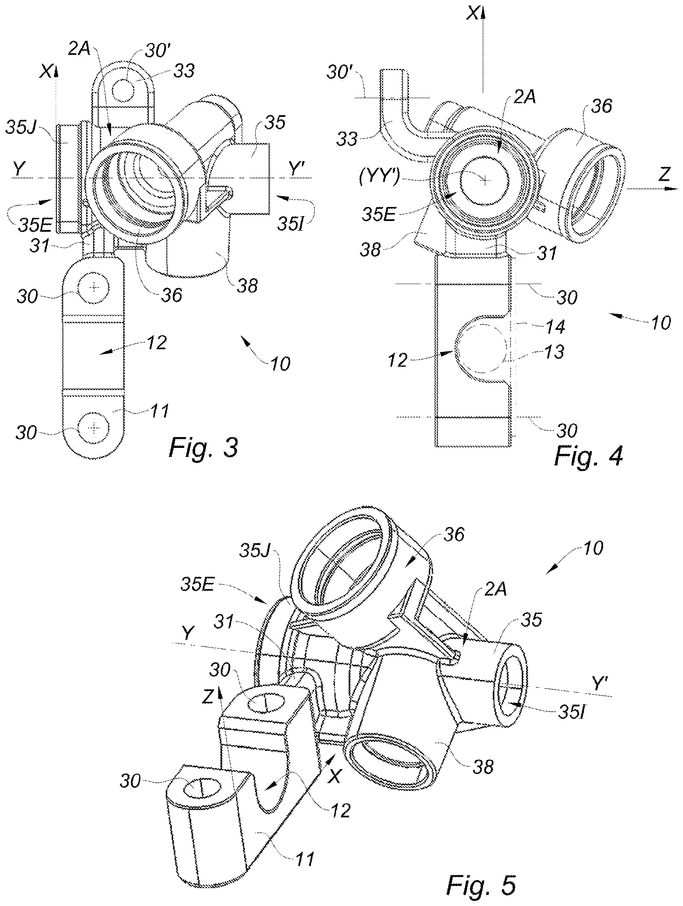

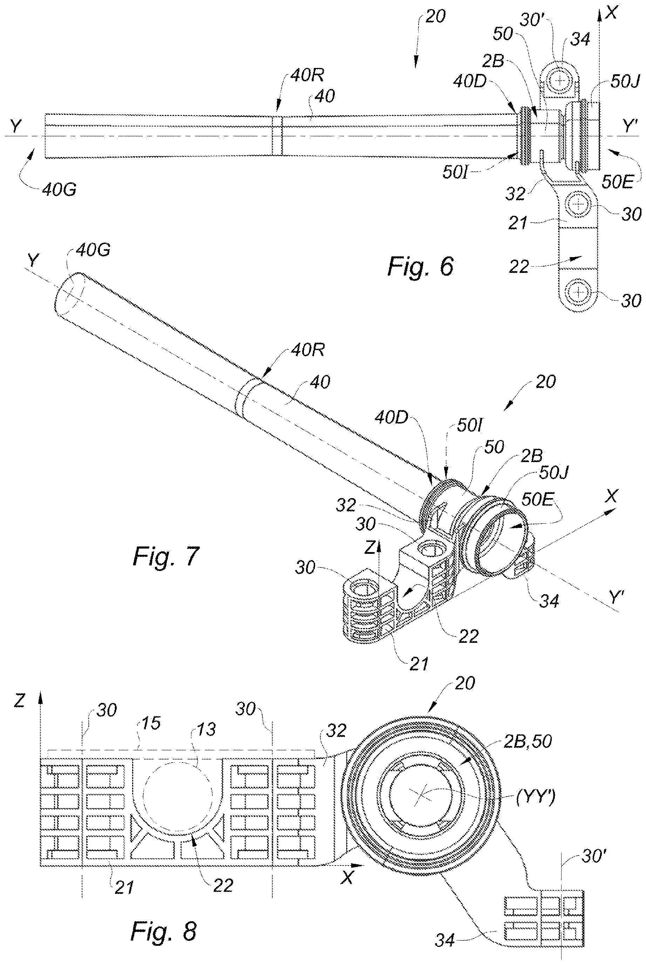

Le cas échéant, une bride 14, 15 (représentée schématiquement en trait pointillé sur les figures 4 et 8), qui pourra éventuellement être porteuse de la douille susmentionnée, viendra se refermer sur le palier 11, 21 (ici, en recouvrant la dépression 12, 22 par le dessus) pour empêcher l'extraction de la barre 13.

Ladite bride 14, 15 pourra par exemple être plate ou bien former un demi-collier, bombé à l'opposé de la dépression 12, 22, par exemple semi-circulaire.

Le maintien axial de la barre 13 en translation (selon la direction latérale gauche-droite) pourra avantageusement être obtenu en prévoyant des collerettes d'arrêt 28, en saillie radiale de la barre 13.

Lesdites collerettes d'arrêt 28 seront de préférence disposées à cet effet en opposition l'une de l'autre par rapport aux paliers gauche 11 et droite 21, tel que cela est visible sur la figure 2, une collerette bloquant le déplacement vers la gauche (ici en butant contre le palier droit 21) et l'autre bloquant le déplacement vers la droite (ici en butant contre le palier gauche 11).

Bien entendu, le procédé comprendra de préférence, après l'étape (b) d'assemblage, une étape (c) de montage de barre stabilisatrice, au cours de laquelle on viendra déposer ou insérer la barre stabilisatrice 13, éventuellement garnie de ses douilles, dans le premier palier 11 et le second palier 21, et brider ladite barre 13 dans lesdits paliers 11, 21 en lui permettant de conserver un degré de liberté en rotation autour de sa ligne génératrice.

A ce titre, on notera que la présence de dépressions 12, 22, de préférence ouvertes vers le haut, permettra une mise en place rapide et simple, avec auto-centrage, de la barre stabilisatrice 13 par le dessus de l'embase 3.

De préférence, la fixation du premier module 10, respectivement du second module 20, sur l'embase 3, se fera par un procédé réversible, tel que le vissage ou le boulonnage.

A cet effet, on pourra de préférence prévoir un ou plusieurs orifices de fixation 30 qui traversent les bords (ici, les branches du U) de chaque palier 11, 21, de préférence de part et d'autre de la dépression 12, 22, et qui permettent le passage d'une vis ou d'un goujon venant ensuite en prise dans l'embase 3, et plus particulièrement dans le bossage 7A, 8A de la zone de réception 7, 8 correspondante.

Avantageusement, ces orifices de fixation 30, et plus particulièrement les deux orifices de fixation 30 situés au voisinage immédiat de la dépression 12, 22 de part et d'autre de cette dernière, pourront avantageusement être utilisés également pour fixer les brides 14, 15 rapportées sur les paliers 11, 21 afin d'empêcher l'extraction de la barre stabilisatrice 13.

On pourra ainsi utiliser en commun, par mesure d'économie et d'allègement, des vis (ou goujons) de fixation pour assurer à la fois la fixation des brides 14, 15 sur le palier 11, 21 et celle du palier 11, 21 (et plus globalement du module 10, 20 correspondant) sur l'embase 3.

Par ailleurs, on pourra prévoir au sein de chaque module 10, 20, tel que cela est illustré sur les figures 3, 4, 6 et 8, un (troisième) orifice de fixation 30', situé à l'opposé du palier 11, 21 par rapport au tronçon de carter 2A, 2B (ou, de manière équivalente, sensiblement à l'opposé du palier 11, 21 par rapport à l'axe directeur (YY')), ce qui, en combinaison avec le ou les orifices de fixation 30 du palier 11, 21, améliorera encore la précision de positionnement et la robustesse de l'arrimage dudit module 10, 20 sur l'embase 3.

Ce troisième orifice de fixation 30' pourra par exemple être porté par une patte d'extension 33, 34, et, le cas échéant, venir en prise, tel que cela est illustré sur la figure 1, au sein de la même zone de réception 7, 8 que celle qui accueille les orifices de fixation 30 du palier, mais sur un bossage 7B, 8B distinct de celui recevant les vis de fixation qui passent par les orifices de fixation 30 du palier 11, 21.

De préférence, au sein d'un même module 10, 20, le palier 11, 21 et le tronçon de carter de direction 2A, 2B correspondant seront reliés par une liaison rigide, et préférentiellement permanente, qui pourra prendre la forme d'un pont de liaison 31, 32, ici orienté de préférence sensiblement selon une direction transverse, et plus particulièrement perpendiculaire, à l'axe directeur (YY').

Bien entendu, les premier et second module 10, 20, et plus particulièrement leurs orifices de fixation 30, 30', ainsi que les zones de réception 7, 8 correspondantes, seront agencés de manière à permettre un positionnement, précis et reproductible, du premier tronçon de carter de direction 2A et du second tronçon de carter de direction 2B de façon coaxiale, dans l'alignement l'un de l'autre selon le même axe directeur (YY'), et ce afin que lesdits tronçons de carter de direction 2A, 2B puissent tous les deux contribuer au guidage (partagé) d'une même crémaillère rectiligne.

De façon particulièrement préférentielle, au sein du premier module 10, le premier tronçon de carter de direction 2A et le premier palier 11 sont fabriqués ensemble d'un seul tenant.

Plus globalement, le premier module 10 (gauche) sera de préférence réalisé intégralement en une seule pièce monolithique, et rigide, distincte de l'embase 3 et du second module 20.

Une telle pièce monolithique, particulièrement robuste, pourra être avantageusement produite à moindre coût et en grande série, par exemple par matriçage ou, de préférence, par moulage.

Par ailleurs, selon un agencement préférentiel, et tel que cela est notamment bien visible sur les figures 3 à 5, le premier tronçon de carter 2A du premier module 10 comprend un premier manchon de guidage 35, conçu pour être traversé par la crémaillère de direction afin de guider en translation ladite crémaillère de direction selon l'axe directeur (YY').

Le manchon de guidage 35 se présente de préférence sous la forme d'un tube centré sur l'axe directeur (YY'), et de section droite préférentiellement sensiblement circulaire.

L'intérieur dudit manchon de guidage 35 accueillera de préférence un palier de guidage de crémaillère (non représenté), tel qu'un palier lisse ou un roulement à billes linéaire, prenant appui sur ledit manchon 35, et conçu pour recevoir la crémaillère et guider celle-ci en translation.

De façon préférentielle, le premier tronçon de carter 2A du premier module 10 comprend également un manchon d'accès 36, sécant à l'axe directeur (YY'), et agencé pour permettre à une colonne de direction pourvue d'un pignon d'entraînement de venir en prise sur ladite crémaillère.

De préférence, le premier manchon de guidage 35 et le manchon d'accès 36 sont formés d'un seul tenant l'un avec l'autre.

Le manchon d'accès 36, de préférence cylindrique de base circulaire, aborde avantageusement le premier manchon de guidage 35 de façon transverse à ce dernier, et communique avec l'intérieur dudit premier manchon de guidage 35, de sorte à permettre l'accès du pignon à la crémaillère.

Par ailleurs, le premier tronçon de carter 2A comporte de préférence également un manchon de poussoir 38 qui est sécant à l'axe directeur (YY'), et de préférence sensiblement perpendiculaire au manchon d'accès 36, et qui est conçu pour accueillir un poussoir (non représenté) destiné à rattraper le jeu d'engrènement de la crémaillère à l'encontre du pignon.

Ledit poussoir peut comporter à cet effet un piston, qui est monté coulissant dans la chemise que forme le manchon de poussoir 38, et qui est précontraint élastiquement à l'encontre du dos de la crémaillère et, indirectement, à l'encontre du pignon, par un organe de rappel du genre ressort.

Le manchon de poussoir 38 est préférentiellement venu de matière avec le premier manchon de guidage 35 et/ou avec le manchon d'accès 36.

Tel que cela est illustré sur les figures 3 et 5, le manchon de guidage 35 pourra avantageusement se prolonger de part et d'autre du manchon d'accès 36 et/ou du manchon de poussoir 38 (en formant sensiblement un T avec chacun de ces derniers), de sorte à présenter d'une part une embouchure interne 35I qui pointe en direction du second tronçon de carter 2B (et qui est de préférence destinée à être raccordée audit second tronçon de carter 2B), et d'autre part, du côté opposé, vers l'extérieur du berceau 1 (ici à gauche), une embouchure externe 35E orientée vers la biellette et la roue directrice.

De préférence, le pourtour 35J de l'embouchure externe 35E formera une jante, éventuellement pourvue d'une gorge annulaire, ladite jante permettant d'accueillir et de fixer un soufflet flexible et extensible protégeant l'extrémité de la crémaillère et la liaison (par exemple de type rotule) de ladite crémaillère avec la biellette (ici la biellette gauche).

De préférence, et quels que soient par ailleurs le nombre et l'agencement de ses différentes parties (palier 11, premier tronçon de carter 2A, manchons 35, 36, 38), le premier module 10 est réalisé dans un alliage métallique léger (au sens déjà mentionné plus haut), tel qu'un alliage d'aluminium ou un alliage de magnésium.

Le premier module 10 peut ainsi combiner une certaine légèreté avec (néanmoins) une rigidité suffisante pour lui permettre d'assurer un guidage précis et stable crémaillère, à travers le manchon de guidage 35, ainsi qu'un engrènement efficace de la colonne de direction.

A titre de variante, le premier module 10 pourrait toutefois être réalisé dans un matériau composite suffisamment robuste, par exemple un matériau composite à matrice polymère renforcée de fibres de renfort.

Dans un cas comme dans l'autre, quel que soit son matériau constitutif, le premier module 10 pourra être réalisé entièrement d'un seul tenant, en intégrant le premier palier 11, et le ou les manchons 35, 36, 38 du premier tronçon de carter 2A.

Un tel agencement garantira notamment la robustesse du module 10 et la précision de positionnement de ses composants, et par conséquent la facilité d'assemblage et d'intégration dudit module 10 ainsi que la qualité de guidage de la crémaillère.

Bien entendu, le second module 20 pourra présenter, *mutatis mutandis,* tout ou partie des caractéristiques décrites en référence au premier module 10.

En particulier, le second tronçon de carter de direction 2B du second module 20 (ici placé du côté droit) comprend de préférence un second manchon de guidage 50, conçu pour être traversé par la crémaillère de direction afin de guider en translation ladite crémaillère de direction selon l'axe directeur (YY').

En d'autres termes, le premier tronçon de carter 2A du premier module 10 et/ou le second tronçon de carter 2B du second module 20 pourront comprendre, l'un, l'autre, ou chacun, un manchon de guidage 35, 50.

Le second manchon de guidage 50 est avantageusement destiné à recevoir un second palier de guidage de crémaillère (non représenté), tel qu'un palier lisse ou un roulement à billes linéaire, assurant le guidage en translation de la crémaillère.

Bien entendu, de manière analogue à ce qui a été décrit en référence au premier manchon de guidage 35 du premier module 10, le second manchon de guidage 50 du second module 20 possède de préférence une embouchure interne 50I (ici à son extrémité gauche), et une embouchure externe 50E (ici à son extrémité droite) par laquelle peuvent émerger l'extrémité droite de la crémaillère et la biellette correspondante.

Ici encore, le pourtour 50J de l'embouchure externe 50E dudit second manchon de guidage 50 pourra former une jante, éventuellement pourvue d'une gorge, et conçue pour recevoir et maintenir un soufflet de protection, dont l'extrémité pourra venir en prise sur la biellette (ici la biellette droite).

De préférence, au sein du second module 20, le second tronçon de carter de direction 2B (et plus particulièrement le second manchon de guidage 50) et le second palier 21 sont fabriqués ensemble d'un seul tenant.

Ici encore, un tel agencement garantira la robustesse du module 20 et la précision de positionnement de ses composants, et par conséquent la facilité d'assemblage et d'intégration dudit module 20 ainsi que la qualité de guidage de la crémaillère.

En définitive, on pourra librement choisir l'agencement des modules 10, 20 de telle sorte que, au sein de leur module 10, 20 respectif, le premier tronçon de carter de direction 2A et le premier palier 11 soient fabriqués ensemble d'un seul tenant, et/ou le second tronçon de carter de direction 2B et le second palier 21 soient fabriqués ensemble d'un seul tenant.

De préférence, l'étape (b) d'assemblage comprend une sous-étape (b1) de reconstitution de carter de direction au cours de laquelle on connecte le premier tronçon de carter 2A du premier module 10 au second tronçon de carter 2B du second module 20 au moyen d'un tube de protection 40, qui est distinct de l'embase 3 et à l'intérieur duquel la crémaillère est destinée à coulisser, de sorte à reconstituer un carter de direction 2 continu depuis le premier module 10 jusqu'au second module 20

Plus particulièrement, ledit tube de protection sera raccordé, par sa première extrémité (ici l'extrémité gauche) 40G, au premier tronçon de carter 2A, et plus particulièrement au premier manchon de guidage 35, au niveau d'une première jonction notée 41G, et, par sa seconde extrémité opposée (ici l'extrémité droite) 40D, au second tronçon de carter 2B, et plus particulièrement au second manchon de guidage 50, au niveau d'une seconde jonction notée 41D, de sorte à former un conduit qui met les manchons de guidage 35, 50 en communication et à travers lequel peut coulisser la crémaillère.

Avantageusement, en reconstituant ainsi un carter de direction 2 complet, formant une coque continue qui s'étend, à la manière d'un pont ininterrompu, sur la largeur du berceau 1, depuis le premier module 10 jusqu'au second module 20, ici au-dessus de la traverse 6, on pourra guider et protéger efficacement la crémaillère, et plus globalement le mécanisme de direction, en maintenant la crémaillère (et le pignon) à l'intérieur d'une coque étanche à la poussière, aux projections d'eau, au brouillard salin, ainsi qu'au lubrifiant qui facilite le mouvement translatif de ladite crémaillère au sein dudit carter de direction 2.

En outre, une telle jonction entre les modules 10, 20 facilite et améliore la précision de l'alignement des tronçons de carter 2A, 2B selon l'axe directeur (YY'), et peut, éventuellement, accroître la rigidité globale du carter 2, notamment vis-à-vis de la flexion verticale.

Le tube de protection 40, et plus particulièrement le tronçon apparent dudit tube de protection 40 qui s'étend depuis l'embouchure interne 35I du premier manchon de guidage 35 jusqu'à l'embouchure interne 50I du second manchon de guidage 50, couvre préférentiellement une longueur qui correspond à plus de la moitié de la largeur hors-tout L3 (mesurée selon l'axe directeur (YY') droite-gauche) de l'embase 3.

En permettant ainsi aux modules 10, 20, et plus particulièrement aux manchons de guidage 35, 50 porteurs de la crémaillère, de se tenir ainsi éloignés à une distance significative l'un de l'autre, sans pour autant perdre l'effet protecteur du carter 2, le tube de protection 40 maximise la portée de guidage de la crémaillère, en améliorant ainsi la stabilité et la précision dudit guidage, tout en conservant au carter 2 sa légèreté.

De préférence, lors de la sous-étape (b1) de reconstitution du carter de direction, on assure la réunion et la jonction du tube de protection 40 avec le premier manchon de guidage 35 appartenant au premier module 10, et/ou respectivement la réunion et la jonction dudit tube de protection 40 avec le second manchon de guidage 50 appartenant au second module 20, en emboîtant ledit tube de protection 40 et ledit manchon de guidage 35, 50 l'un dans l'autre, dans le prolongement l'un de l'autre selon l'axe directeur (YY').

A ce titre, on pourra prévoir, sur le tube de protection 40 et/ou sur le ou les manchon(s) de guidage 35, 50 concerné(s) un excédent de longueur permettant le chevauchement mutuel de ces éléments.

Au niveau de chaque jonction concernée, ladite longueur de chevauchement, mesurée selon l'axe directeur (YY'), pourra être sensiblement comprise entre 20 mm et 40 mm, et plus particulièrement d'environ 30 mm.

Un ou plusieurs joints racleurs, par exemple des joints toriques logés dans des rainures annulaires, pourront être interposés radialement entre le tube de protection 40 et le manchon de guidage 35, 50 concerné pour assurer l'étanchéité de l'assemblage par emboîtement.

Avantageusement, un assemblage par emboîtement est simple et rapide à mettre en oeuvre, et peut en outre autoriser, tel que cela sera détaillé ci-après, une mobilité résiduelle entre le tube de protection 40 et le module 10, 20, laquelle facilite le réglage de la configuration spatiale du carter de direction 2.

En effet, selon une caractéristique préférentielle qui peut constituer une invention à part entière, lors de la sous-étape (b1) de reconstitution de carter de direction, on réalise au moins l'une des jonctions 41G, 41D entre le tube de protection 40 et l'un des tronçons de carter 2A, 2B de l'un des modules 10, 20, de préférence la jonction (ici 41G) entre le tube de protection 40 et le premier tronçon de carter 2A du premier module 10, en préservant au moins un degré de liberté entre ledit tube de protection 40 et le module 10, 20, de préférence un degré de liberté en translation selon l'axe directeur (YY') et/ou un degré de liberté en rotation autour dudit axe directeur (YY'), de sorte à autoriser une mobilité relative du tube de protection 40 par rapport au module 10, 20 concerné sans rompre la continuité du carter de direction 2.

De préférence, lors de la sous-étape (b1) de reconstitution de carter, on pourra notamment emboîter le tube de protection 40 avec le manchon de guidage 35, 50 du module concerné 10, 20 selon l'axe directeur (YY'), de sorte à former une jonction 41G, 41D glissière (autorisant le coulissement en translation) ou pivot-glissant (autorisant la translation et la rotation) selon ledit axe directeur (YY').

En d'autres termes, on pourra réaliser un emboîtement libre, de sorte à conserver un degré de liberté du tube de protection 40 par rapport au manchon de guidage 35, 50 concerné en coulissement (et/ou en rotation) selon l'axe directeur (YY'), sans compromettre la continuité ni l'étanchéité du carter de direction 2, ce qui permet avantageusement audit carter de direction 2 d'accommoder des déformations, et notamment des dilatations axiales selon ledit axe directeur (YY').

En particulier, un tel agencement facilitera bien entendu l'assemblage du berceau 1, en offrant une possibilité de réglage d'entraxe (par coulissement en translation) et/ou d'orientation en basculement (par rotation en tangage) lors du positionnement et de la fixation des modules 10, 20 sur leur zone de réception 7, 8 respective.

De préférence, le ou les degrés de liberté entre le tube de protection 40 et le ou les modules 10, 20 concerné(s) subsisteront de façon permanente au niveau de la jonction 41G concernée, même après fixation des modules 10, 20 sur l'embase 3, de manière à conserver la capacité d'adaptation du carter 2 aux déformations et mouvements relatifs entre ses composants.

Plus particulièrement, un tel emboîtement coulissant permettra au carter 2 d'accommoder sans contrainte (notamment de traction/compression selon l'axe directeur (YY') et/ou de torsion autour de ce même axe) les modifications dimensionnelles liées à d'éventuelles dilatations thermiques affectant les modules 10, 20, le tube de protection 40 et/ou l'embase 3 à laquelle lesdits modules 10, 20 se rattachent.

Ceci sera particulièrement appréciable dans le cas où l'on utilise des matériaux différents pour fabriquer l'embase 3 et le carter de direction 2, voire chacun des premier et second modules 10, 20, de sorte que des dilatations thermiques différentielles sont susceptibles de se produire entre ces éléments.

Bien entendu, d'autres possibilités alternatives d'accouplement des tronçons de carter gauche 2A et droit 2B sont néanmoins envisageables, par exemple par collage, ou bien encore par bridage circonférentiel, en aboutant et boulonnant entre eux des collets qui seraient formés aux extrémités respectives du manchon de guidage 35, 50 d'une part et du tube de protection 40 d'autre part.

De préférence, et quelle que soit la forme prise par les jonctions entre les modules 10, 20 et le tube de protection 40, la sous-étape (b1) de reconstitution de carter de direction 2 intervient avant une sous-étape (b2) d'implantation au cours de laquelle on rapporte et l'on fixe le premier module 10 et le second module 20, préalablement reliés l'un à l'autre par le tube de protection 40, sur leurs zones de réception respectives gauche 7 et droite 8.

En d'autres termes, le carter de direction 2 sera de préférence préconstitué par réunion (de préférence par emboîtement coulissant) du premier module 10 et du second module 20, avant d'être rapporté et fixé en tant que sous-ensemble sur l'embase 3.

De manière générale, on facilitera ainsi l'approvisionnement du carter 2 sur la ligne et sa manoeuvre de report sur l'embase 3.

Avantageusement, le pré-assemblage du carter de direction 2, associé à l'utilisation d'une ou de deux jonctions 41G, 41D de type emboîtement glissant tel que décrites plus haut, facilite grandement la mise en place et le réglage de position des composants dudit carter 2 sur l'embase 3, ce qui permet de raccourcir la durée de la sous-étape (b2) d'implantation.

De préférence, la fixation des premier et second modules 10, 20 sur les zones de réception 7, 8 de l'embase 3 sera réalisée par vissage ou boulonnage à travers les orifices de fixation 30, 30'.

De façon préférentielle, seule la fixation effective en position des modules 10, 20 du carter de direction 2 sur l'embase 3 permettra de maintenir ledit carter 2 sous sa forme fonctionnelle définitive, les modules 10, 20 conservant en effet leur liberté de déplacement relatif, et notamment leur liberté de séparation axiale mutuelle, jusqu'à ce qu'intervienne ladite fixation sur l'embase 3 (ladite fixation sur l'embase figeant notamment la distance qui sépare axialement lesdits modules).

De préférence, et quel que soit par ailleurs le mode de réalisation retenu, le tube de protection 40 est initialement, c'est-à-dire avant que n'ait lieu la sous-étape (b1) de reconstitution du carter 2, distinct de l'un au moins des premier et second modules 10, 20.

En outre, la jonction entre le premier module 10 et le second module 20, et plus particulièrement la jonction entre le tube de protection 40 et l'un au moins des manchons de guidage 35, 50 (voire les deux jonctions du tube 40 avec respectivement chacun des manchons de guidage 35, 50), sera de préférence réversible.

Ainsi, grâce au caractère modulaire du carter de direction 2, on pourra au besoin remplacer aisément un module 10, 20 défectueux, voire le seul tube de protection 40, sans avoir à mettre l'ensemble dudit carter de direction 2, et a *fortiori* du berceau 1, au rebut.

On notera par ailleurs que l'agencement proposé par l'invention permet d'intervenir sur la barre 13 ou le carter de direction 2, et notamment de mettre ceux-ci en place ou de les retirer de l'embase 3, que le berceau soit ou non fixé sur les longerons 42, 43, et en particulier avant de rapporter le berceau sur les longerons 42, 43.

On notera également qu'il est possible de régler facilement la configuration du carter 2, et plus particulièrement de réajuster la position ou l'orientation des modules 10, 20, sur l'embase 3, ou bien encore de procéder au remplacement de l'un de ces composants élémentaires, sans interférer avec la fixation des zones d'arrimage 4, 5 sur les longerons 42, 43.

L'agencement modulaire propre à l'invention, et plus particulièrement le caractère indépendant (structurellement et fonctionnellement) de l'embase 3, du premier module 10, du second module 20, et des longerons 42, 43, autorise donc une grande liberté quant à la réalisation de ces composants et quant à l'ordre de mise en oeuvre des étapes du processus d'assemblage, et par conséquent quant à l'organisation du cycle d'approvisionnement (livraison) et de fabrication.

Par ailleurs, la dissociation de fabrication entre le tube de protection 40 et l'un au moins de modules 10, 20, voire entre ledit tube 40 et chacun des deux modules 10, 20, permet avantageusement de réaliser le tube de protection 40 dans un matériau différent de celui du ou des modules 10, 20 concernés, et plus particulièrement dans un matériau moins résistant mécaniquement (et donc a priori meilleur marché et plus léger) que le matériau constitutif des manchons de guidage 35, 50.

Plus globalement, on notera en effet que l'agencement propre à l'invention permet de soulager le tube de protection 40 de toute contrainte mécanique importante, ledit tube 40 n'ayant ainsi à assumer qu'un simple rôle d'écran de protection (et notamment d'écran étanche) isolant la crémaillère de son environnement.

En effet, les efforts de guidage de la crémaillère, et notamment des efforts radiaux, transverses à l'axe directeur (YY'), sont supportés par les manchons de guidage 35, 50.

Les efforts structurels appliqués au châssis 44, et notamment les chocs et déformations dus au roulage, tels que les contraintes de rapprochement transverse, de torsion, ou de flexion verticale, sont supportés par l'embase 3 et plus particulièrement par la traverse 6.

Grace à l'invention, il n'est donc pas nécessaire de prévoir des structures redondantes pour assurer la rigidité du berceau 1, ni de sur-dimensionner le carter de direction 2 et en particulier le tube de protection 40.

Par conséquent, le tube de protection 40 étant initialement formé séparément de l'un au moins des modules 10, 20, par exemple séparément du premier module 10, le matériau constitutif dudit tube de protection 40 peut être de préférence différent du matériau constitutif dudit module 10, 20, et préférentiellement moins dense que ledit matériau constitutif dudit module 10, 20.

En tout état de cause, le tube de protection 40 pourra de préférence être réalisé dans un matériau composite comprenant une matrice en matériau polymère renforcée par des fibres.

Plus particulièrement, la matrice pourra être réalisée en Polyamide aliphatique (PA6 ou PA66 par exemple), en polyamide aromatique (PA6T6I par exemple), en Polybuthylèneterephtalate (PBT), en polyphenylènesulfphone (PPS), en polyester (PE) ou en epoxy.

Des fibres de renfort en verre, en aramide ou en carbone pourront être utilisées.

Lesdites fibres pourront être soit réparties aléatoirement dans la matrice polymère sous forme de fibres courtes, soit au contraire ordonnées sous forme de fibres continues, afin de renforcer le module 20 dans les zones très sollicitées.

Les fibres de verre, d'aramide ou de carbone pourront être utilisées soit seules, soit en combinaison mixte (verre et carbone, ou carbone et aramide, ou un mélange des trois).

Le cas échéant, le carter 2 pourra résulter de l'assemblage d'un tube de protection 40 en matériau composite avec au moins un module 10, voire les deux modules 10, 20 réalisés dans un alliage métallique léger tel que décrit plus haut.

Selon un premier mode de réalisation, le tube de protection 40 pourra être fabriqué séparément de chacun des premier et second modules 10, 20.

Selon une possibilité d'assemblage, le rattachement du tube de protection 40 avec les deux modules 10, 20 pourra alors s'opérer par deux jonctions 41G, 41D par emboîtement glissant, avantageusement réversibles, telles que décrites plus haut.

On conservera ainsi une liberté de mouvement entre chaque module 10, 20 et l'extrémité correspondante dudit tube 40.

Toutefois, selon une autre possibilité d'assemblage préférentielle, le tube de protection 40 pourra être fabriqué séparément de chacun des premier et second modules 10, 20 puis rapporté et fixé sur l'un desdits modules, par exemple (et par simple commodité de description) sur le second module 20.

A cet effet, le tube de protection 40 pourra de préférence être fixé, et notamment emboîté, collé et/ou soudé, notamment par soudage par friction, de façon étanche au lubrifiant et de préférence étanche à l'eau, dans ou contre le second tronçon 2B de carter de direction, et plus particulièrement dans ou contre le second manchon de guidage 50, dans le prolongement axial dudit second tronçon 2B (respectivement dudit second manchon de guidage).

Plus globalement, on notera que, selon une configuration préférentielle, au cours de la sous-étape (b1) de reconstitution de carter de direction, le tube de protection 40 est préalablement solidarisé par l'une de ses extrémités 40D à l'un des modules 10, 20, de préférence au second module 20, selon une jonction fixe (ici la seconde jonction 41D) qui maintient ledit tube de protection 40 en position invariante par rapport audit module 20, avant d'être ensuite engagé, par son extrémité 40G opposée, sur l'autre module 10, de préférence le premier module 10, selon une jonction (ici la première jonction 41G) autorisant une mobilité relative.

Avantageusement, en solidarisant le tube de protection 40 et le module 20 au sein d'un même sous-ensemble unique, aisément manipulable, on facilitera les manoeuvres d'engagement et d'ajustement avec l'autre module 10.

Le cas échéant, les deux modules 10, 20 pourront être réalisés dans un même matériau constitutif, par exemple un alliage métallique léger, et former un carter bi-matière avec le tube de protection 40 en matériau composite.

En variante, chacun des modules 10, 20 pourra être réalisé dans un matériau distinct de celui de l'autre module, et en outre différent du matériau constitutif du tube de protection 40, de sorte à former un carter 2 tri-matière.

Par ailleurs, il n'est pas exclu que le premier module 10 et/ou le second module 20 soient eux-mêmes réalisés dans un ou des matériaux composites à matrice polymère parmi ceux mentionnés ci-dessus.

Le cas échéant, le matériau composite constitutif du ou des modules 10, 20 concernés pourra être choisi plus résistant mécaniquement que celui constitutif du tube de protection 40.

Selon un second mode de réalisation, illustré notamment sur les figures 6 à 8, le tube de protection 40 pourra être intégré d'un seul tenant au second module 20, en étant venu de matière avec le second manchon de guidage 50 (et le cas échéant avec le second palier 21 de barre stabilisatrice 13), dans le prolongement dudit manchon de guidage 50 selon l'axe directeur (YY').

En d'autres termes, lors de l'étape (a) de préfabrication, on fabrique de préférence le tube de protection 40 d'un seul tenant avec l'un des modules 10, 20, préférentiellement avec le second module 20.

Selon ce second mode de réalisation, tel que cela est visible sur la figure 2, le premier module 10 (gauche) et le second module 20 (droit) seront donc conçus pour être directement complémentaires, c'est-à-dire pour que leur tronçons de carter 2A, 2B respectifs puissent être réunis de sorte à se toucher directement et à reconstituer un carter de direction 2.

Selon une telle répartition dissymétrique, liée à l'intégration du tube de protection 40 au second module 20, la jonction du tube de protection 40 avec le premier module 10 s'opère dans la moitié gauche du berceau 1, tel que cela est illustré sur la figure 2.

Selon ce second mode de réalisation, le premier module 10 peut ainsi être plus compact, et plus particulièrement strictement plus court selon l'axe directeur (YY'), que le second module 20, tout en permettant malgré tout une jonction étanche des deux modules 10, 20.

De ce fait, on peut avantageusement alléger globalement le carter de direction 2, en réalisant non seulement le tube de protection 40, mais plus globalement l'ensemble du second module 20, dans un matériau plus léger (moins dense) que celui qui constitue le premier manchon de guidage 35, et plus globalement le premier module 10.

En outre, ici encore, on pourra ainsi manipuler solidairement le tube de protection 40 et le module 20 qui lui est associé, en tant que sous-ensemble unique, ce qui facilitera les manoeuvres d'engagement et d'ajustement avec l'autre module 10.

De préférence le second module 20 pourra notamment être réalisé dans un matériau composite comprenant une matrice en matériau polymère renforcée par des fibres, et plus particulièrement dans un matériau composite tel que décrit plus haut en référence au tube de protection 40.

Le second module 20 sera alors de préférence réalisé en moulage par injection, à moindre coût.

Ici encore, on pourra notamment envisager une structure de carter 2 mixte, bi-matière, en accouplant un second module 20 en matériau composite à base polymère avec un premier module 10 en alliage métallique léger.

En tout état de cause, le matériau constitutif du second module 20, et/ou le matériau constitutif du tube de protection 40, pourra être distinct et moins dense que celui de l'embase 3, ce qui contribue à alléger le berceau 1 sans compromettre la solidité ni la rigidité dudit berceau 1.

Selon un troisième mode de réalisation (non représenté), on pourrait envisager que le premier module 10 et le second module 20 présentent des tronçons de carter 2A, 2B sensiblement symétriques par rapport au plan sagittal du véhicule (qui correspond ici au plan parallèle à la direction de marche X et passant par le milieu de la traverse 6).

Selon un tel mode de réalisation, le manchon de guidage 35 du premier module 10 et le manchon de guidage 50 du second module 20 pourraient chacun se prolonger (l'un vers l'autre), selon l'axe directeur (YY'), par une portion respective de tube de protection 40.

Plus particulièrement, chacun desdits modules 10, 20, et plus spécifiquement chacune desdites portions de tube de protection 40, pourrait couvrir sensiblement la moitié de la distance séparant les fixations respectives desdits modules, de telle sorte que lesdits modules 10, 20 opéreraient une jonction directe, par exemple par emboîtement, sensiblement au milieu du berceau 1, c'est-à-dire sensiblement dans le plan sagittal qui divise ledit berceau 1 en une moitié gauche et une moitié droite.

On aura par ailleurs noté que, en définitive, le carter de direction 2 peut être avantageusement subdivisé axialement en seulement deux éléments (second et troisième modes de réalisation susmentionnés), voire trois éléments (premier mode de réalisation susmentionné), distincts mais jointifs.

Plus particulièrement, trois pièces (le premier module 10, le second module 20, et le tube de protection 40), voire deux pièces seulement (le premier module 10, et le second module 20 qui intègre le tube de protection 40), suffiront donc à reconstituer, ensemble, et de façon complémentaire sur la largeur du berceau 1, l'ensemble de la portion tubulaire du carter de direction 2 qui assure le guidage et la protection de la crémaillère, sans requérir l'ajout d'un quelconque tronçon de carter intermédiaire (notamment entre les premier et second tronçons de carter 2A, 2B).

La fabrication et l'assemblage du carter de direction 2, et par conséquent du berceau 1, s'en trouveront ainsi simplifiés.

Quel que soit par ailleurs le mode de réalisation retenu, le tube de protection 40 est de préférence généré sous forme d'un cylindre, préférentiellement de section transverse circulaire, balayant l'axe directeur (YY') rectiligne, sur lequel ledit cylindre est de préférence centré.

L'épaisseur de la paroi dudit tube de protection 40 sera de préférence sensiblement constante.

Ladite épaisseur, mesurée selon la direction radiale perpendiculaire à l'axe directeur (YY'), pourra par exemple être comprise entre 2,5 mm et 4 mm.

Selon une variante de réalisation, le tube de protection 40 pourra présenter un diamètre sensiblement constant sur toute sa longueur, depuis le premier module 10 jusqu'au second module 20, et plus particulièrement du premier manchon de guidage 35 jusqu'au second manchon de guidage 50.

Selon une telle variante de réalisation, particulièrement adaptée à la réalisation d'un tube 40 initialement séparé des premier et second module 10, 20 puis rapporté sur ces derniers, ledit tube 40 pourra par exemple être obtenu en tronçonnant à la longueur voulue un profilé métallique ou composite obtenu par exemple par extrusion ou pultrusion.

Selon une autre variante de réalisation, qui peut constituer une invention à part entière, le tube de protection 40 pourra au contraire présenter un étranglement 40R, de sorte à adopter une forme sensiblement biconique, tel que cela est illustré sur les figures 2, 6 et 7.

Ledit étranglement 40 R sera de préférence situé sensiblement au milieu dudit tube 40, c'est-à-dire à la mi-longueur qui coïncide sensiblement avec le plan sagittal du berceau 1.

Avantageusement, un tel étranglement 40R permet de réaliser aisément le tube de protection 40 par moulage, le cas échéant d'un seul tenant avec le second manchon de guidage 50, en utilisant deux broches (gauche et droite) qui forment des noyaux tronconiques et qui se rejoignent (en opposition par leur petite base) dans un plan de joint qui se situe au niveau de l'étranglement 40R et qui est sensiblement perpendiculaire à l'axe directeur (YY').

Une telle forme de réalisation en double cône, et plus particulièrement à étranglement 40R central, présente avantageusement une double dépouille, l'une vers la gauche, et l'autre vers la droite), ce qui permet de limiter le diamètre du tube 40 à ses extrémités 40G, 40D, par rapport à ce que serait un tube mono-tronconique à dépouille simple, tout en maintenant un angle de dépouille convenable, et donc en garantissant la facilité de démoulage, malgré la longueur importante dudit tube 40.

On peut ainsi réduire la taille du moule, l'encombrement hors-tout du tube de protection 40, le poids dudit tube 40, ainsi que la quantité de matière nécessaire à sa fabrication.

Du reste, et quelle que soit la forme du tube de protection (rectiligne, convexe, concave, biconique, etc.), ledit tube de protection 40 présentera de préférence un diamètre (et une forme de section transverse) sensiblement identique(s) à chacune de ses extrémités 40G, 40D.

De façon particulièrement préférentielle, les longerons 42, 43 sont quant à eux réalisés en acier.

Un tel matériau permet en effet d'obtenir des longerons particulièrement robustes, et faciles à mettre en forme notamment par emboutissage.

En outre, la ductilité de l'acier permet aux longerons 42, 43 d'assurer une fonction de protection passive de l'habitacle du véhicule en cas de collision, et plus particulièrement en cas de choc frontal, en conférant auxdits longerons 42, 43 une capacité à se déformer plastiquement, de manière programmée, en absorbant et dissipant une partie de l'énergie dudit choc.

Ici encore, la modularité du berceau 1 permettra de dédier cette fonction de protection passive aux longerons 42, 43, en réalisant notamment lesdits longerons 42, 43 dans un matériau approprié, tel que l'acier, distinct de, et en l'occurrence plus dense que, le matériau constitutif de l'embase 3 (et du ou des matériaux constitutifs des modules 20, 30).

De préférence, l'extrémité avant du longeron gauche 42 pourra en outre être reliée à l'extrémité avant du longeron droit 43 par un arceau dit « cadre crash » (non représenté), distinct de l'embase 3, et qui prolonge le châssis 44 vers l'avant, sous le moteur.

Un tel agencement permet avantageusement de conférer au châssis 44 un contour fermé (en combinaison avec les longerons 42, 43 et la traverse de la caisse en blanc 45), robuste mais néanmoins capable au besoin de se déformer pour dissiper l'énergie d'un choc.

Bien entendu, l'invention porte également en tant que tel sur un carter de direction 2 destiné à accueillir et guider en translation, selon un axe directeur (YY'), un organe actionneur de direction, tel qu'une crémaillère, ledit carter 2 étant fractionné longitudinalement en d'une part un premier module 10 qui comprend d'un seul tenant, dans un premier matériau :
- un premier tronçon 2A de carter de direction 2 qui est conçu pour former une première portée de guidage de l'organe actionneur de direction, et qui couvre à cet effet une première portion de longueur selon l'axe directeur (YY'),
- ainsi qu'un premier palier 11 formant une première dépression 12 agencée pour pouvoir accueillir et soutenir une barre stabilisatrice 13,
et d'autre part un second module 20 qui comprend d'un seul tenant, dans un second matériau différent du premier matériau :
- un second tronçon 2B de carter de direction 2 qui est conçu pour former une seconde portée de guidage de l'organe actionneur de direction, axialement distincte de la première portée de guidage offerte par le premier tronçon de carter 2A, ledit second tronçon de carter se prolongeant préférentiellement par un tube de protection 40 de manière à couvrir une seconde portion de longueur selon l'axe directeur (YY') qui complète la portion de longueur couverte par le premier tronçon de carter 2A,
- ainsi qu'un second palier 21 formant une seconde dépression 22 agencée pour pouvoir accueillir et soutenir la barre stabilisatrice 13 à distance du premier palier 11.

De préférence, lesdits premier et second tronçons 2A, 2B de carter sont juxtaposés, le long de l'axe directeur (YY'), et plus préférentiellement emboîtés, pour former le carter de direction 2 complet, sur toute sa longueur, et assurer un guidage précis, une lubrification efficace, et une protection fiable de la crémaillère qui coulisse en leur sein.

Bien entendu, l'invention concerne en tant que tel un premier module 10 ou un second module 20, et plus particulièrement une paire de modules 10, 20 gauche/droit selon l'une ou l'autre des variantes décrites, lesdits modules comprenant chacun, d'un seul tenant, d'une part au moins une première branche formant un tronçon de carter de direction 2A, 2B apte au guidage de la crémaillère (respectivement sous forme d'un premier et d'un second manchon de guidage 35, 50, se prolongeant le cas échéant par un tube de protection 40 intégré), d'autre part au moins une seconde branche, formant de préférence une extension sécante voire sensiblement perpendiculaire à la première branche, qui porte un palier 11, 21 destiné à accueillir une barre stabilisatrice 13, et enfin des moyens de fixation, par exemple des orifices de fixation 30, 30', permettant de rapporter et fixer individuellement, de préférence de manière réversible pour conserver son amovibilité, le module 10, 20 considéré sur une embase 3 de berceau 1.

L'invention concerne enfin en tant que tel un berceau 1 obtenu selon le procédé conforme à l'invention, ainsi qu'un véhicule, et plus particulièrement un véhicule automobile destiné au transport de personnes et/ou de marchandise, du genre véhicule à roues motrices et directrices, qui est équipé d'un tel berceau 1.

Bien entendu, l'invention n'est par ailleurs nullement limitée aux variantes de réalisation décrites dans ce qui précède, l'homme du métier étant notamment à même d'isoler ou de combiner entre elles l'une ou l'autre des caractéristiques susmentionnées.

En particulier, il serait parfaitement envisageable d'adapter *mutatis mutandis* le procédé et le berceau décrit en permutant les références aux côtés gauche et droit.

## Revendications

1. Procédé d'assemblage d'un berceau (1) pour essieu directeur d'un véhicule, ledit procédé comportant :
une étape (a) de préfabrication, au cours de laquelle on réalise séparément :
- une embase (3), qui comprend une zone d'arrimage gauche (4) conçue pour être fixée à un élément de châssis gauche (42) du véhicule, une zone d'arrimage droite (5) conçue pour être fixée à un élément de châssis droit (43) du véhicule, une traverse (6) qui joint la zone d'arrimage gauche (4) à la zone d'arrimage droite (5), ainsi qu'une zone de réception gauche (7) et une zone de réception droite (8) distantes l'une de l'autre et destinées à offrir chacune un appui à un carter de direction (2) conçu pour recevoir et guider en translation une crémaillère de direction,
- un premier module (10), distinct de l'embase (3), qui comprend d'une part un premier tronçon (2A) de carter de direction (2) destiné à offrir une première portée de guidage à la crémaillère, ainsi qu'un premier palier (11) qui est solidaire dudit premier tronçon (2A) de carter de direction et qui forme une première dépression (12) agencée pour pouvoir accueillir et soutenir une barre stabilisatrice (13),
- un second module (20), distinct de l'embase (3) et du premier module (10), ledit second module (20) comprenant d'une part un second tronçon (2B) de carter de direction (2) destiné à offrir une seconde portée de guidage à la crémaillère, et d'autre part un second palier (21) solidaire dudit second tronçon (2B) de carter de direction, ledit second palier (21) formant une seconde dépression (22) agencée pour pouvoir accueillir et soutenir la barre stabilisatrice (13),
puis une étape (b) d'assemblage, au cours de laquelle on rapporte et l'on fixe d'une part le premier module (10) sur la zone de réception gauche (7) de l'embase (3), et d'autre part le second module (20) sur la zone de réception droite (8) de ladite embase.

2. Procédé selon la revendication 1 **caractérisé en ce que**, au sein du premier module (10), le premier tronçon de carter de direction (2A) et le premier palier (11) sont fabriqués ensemble d'un seul tenant, et/ou **en ce que** au sein du second module (20), le second tronçon de carter de direction (2B) et le second palier (21) sont fabriqués ensemble d'un seul tenant.

3. Procédé selon la revendication 1 ou 2 **caractérisé en ce que** le premier tronçon de carter (2A) du premier module (10) comprend un premier manchon de guidage (35) conçu pour être traversé par la crémaillère de direction afin de guider en translation ladite crémaillère de direction selon un axe directeur (YY'), et/ou **en ce que** le second tronçon de carter (2B) du second module (20) comprend un second manchon de guidage (50) conçu pour être traversé par la crémaillère de direction afin de guider en translation ladite crémaillère de direction selon ledit axe directeur (YY').

4. Procédé selon l'une des revendications précédentes **caractérisé en ce que** le premier tronçon de carter (2A) du premier module (10) comprend un premier manchon de guidage (35) conçu pour être traversé par la crémaillère de direction afin de guider en translation ladite crémaillère de direction selon un axe directeur (YY'), ainsi qu'un manchon d'accès (36), sécant à l'axe directeur (YY') et agencé pour permettre à une colonne de direction pourvue d'un pignon d'entraînement de venir en prise sur ladite crémaillère, le manchon de guidage (35) et le manchon d'accès (36) étant de préférence formés d'un seul tenant l'un avec l'autre.

5. Procédé selon l'une des revendications précédentes **caractérisé en ce que** l'étape (b) d'assemblage comprend une sous-étape (b1) de reconstitution de carter de direction au cours de laquelle on connecte le premier tronçon de carter (2A) du premier module (10) au second tronçon de carter (2B) du second module (20) au moyen d'un tube de protection (40), qui est distinct de l'embase et à l'intérieur duquel la crémaillère est destinée à coulisser, de sorte à reconstituer un carter de direction (2) continu depuis le premier module (10) jusqu'au second module (20).

6. Procédé selon la revendication 5 **caractérisé en ce que** la sous-étape (b1) de reconstitution de carter de direction (2) intervient avant une sous-étape (b2) d'implantation au cours de laquelle on rapporte et l'on fixe le premier module (10) et le second module (20), préalablement reliés l'un à l'autre par le tube de protection (40), sur leurs zones de réception respectives gauche (7) et droite (8).

7. Procédé selon la revendication 5 ou 6 et selon l'une des revendications 3 ou 4 **caractérisé en ce que**, lors de la sous-étape (b1) de reconstitution de carter de direction, on assure la réunion et la jonction du tube de protection (40) avec le premier manchon de guidage (35) appartenant au premier module (10), et/ou respectivement la réunion et la jonction dudit tube de protection (40) avec le second manchon de guidage (50) appartenant au second module (20), en emboîtant ledit tube de protection (40) et ledit manchon de guidage (35, 50) l'un dans l'autre, dans le prolongement l'un de l'autre selon l'axe directeur (YY').

8. Procédé selon l'une des revendications 5 à 7 **caractérisé en ce que**, lors de la sous-étape (b1) de reconstitution de carter de direction, on réalise au moins l'une des jonctions (41G, 41D) entre le tube de protection (40) et l'un des tronçons de carter (2A, 2B) de l'un des modules (10, 20), de préférence la jonction (41G) entre le tube de protection (40) et le premier tronçon de carter (2A) du premier module (10), en préservant au moins un degré de liberté entre ledit tube de protection (40) et le module (10, 20), de préférence un degré de liberté en translation selon l'axe directeur (YY') et/ou un degré de liberté en rotation autour dudit axe directeur (YY'), de sorte à autoriser une mobilité relative du tube de protection (40) par rapport au module (10, 20) concerné sans rompre la continuité du carter de direction (2).

9. Procédé selon la revendication 7 ou 8 **caractérisé en ce que**, lors de la sous-étape (b1) de reconstitution de carter de direction, on emboîte le tube de protection (40) avec le manchon de guidage (35, 50) du module concerné (10, 20) selon l'axe directeur (YY'), de sorte à former une jonction (41G, 41D) glissière ou pivot-glissant selon ledit axe directeur (YY').

10. Procédé selon l'une des revendications 8 ou 9 **caractérisé en ce que**, au cours de la sous-étape (b1) de reconstitution de carter de direction, le tube de protection (40) est préalablement solidarisé par l'une de ses extrémités (40D) à l'un des modules (10, 20), de préférence au second module (20), selon une jonction fixe qui maintient ledit tube de protection (40) en position invariante par rapport audit module (20), avant d'être ensuite engagé, par son extrémité (40G) opposée, sur l'autre module (10), de préférence le premier module (10), selon une jonction (41G) autorisant une mobilité relative.

11. Procédé selon l'une des revendications 5 à 10 **caractérisé en ce que**, lors de l'étape (a) de préfabrication, on fabrique le tube de protection (40) d'un seul tenant avec l'un des modules (10, 20), de préférence avec le second module (20).

12. Procédé selon l'une des revendications 5 à 11 **caractérisé en ce que**, le tube de protection (40) étant initialement formé séparément de l'un au moins des modules (10, 20), par exemple séparément du premier module (10), le matériau constitutif dudit tube de protection (40) est différent du matériau constitutif dudit module (10, 20), et de préférence moins dense que ledit matériau constitutif dudit module (10, 20).

13. Procédé selon l'une des revendications précédentes **caractérisé en ce que** le second module (20) est réalisé dans un matériau composite comprenant une matrice en matériau polymère renforcée par des fibres.

14. Procédé selon l'une des revendications précédentes **caractérisé en ce que** le premier module (10) est réalisé dans un alliage métallique léger, tel qu'un alliage d'aluminium ou un alliage de magnésium.

15. Carter de direction (2) destiné à accueillir et guider en translation, selon un axe directeur (YY'), un organe actionneur de direction, tel qu'une crémaillère, ledit carter de direction (2) étant **caractérisé en ce qu'**il est fractionné longitudinalement en d'une part un premier module (10) qui comprend d'un seul tenant, dans un premier matériau, un premier tronçon (2A) de carter de direction (2) qui est conçu pour former une première portée de guidage de l'organe actionneur de direction, et qui couvre à cet effet une première portion de longueur selon l'axe directeur (YY'), ainsi qu'un premier palier (11) formant une première dépression (12) agencée pour pouvoir accueillir et soutenir une barre stabilisatrice (13), et d'autre part un second module (20) qui comprend d'un seul tenant, dans un second matériau différent du premier matériau, un second tronçon (2B) de carter de direction (2) qui est conçu pour former une seconde portée de guidage de l'organe actionneur de direction, ledit second tronçon de carter se prolongeant par un tube de protection (40) de manière à couvrir une seconde portion de longueur selon l'axe directeur (YY') qui complète la portion de longueur couverte par le premier tronçon (2A) de carter, ainsi qu'un second palier (21) formant une seconde dépression (22) agencée pour pouvoir accueillir et soutenir la barre stabilisatrice (13) à distance du premier palier (11).

## Patentansprüche

1. Verfahren zum Zusammenbauen einer Halterung (1) für Leitachse eines Fahrzeugs, wobei das Verfahren Folgendes umfasst:
einen Vorfertigungsschritt (a), in dessen Verlauf man getrennt Folgendes fertigt:
- einen Sockel (3), der eine linke Befestigungszone (4) umfasst, die konzipiert ist, um an einem linken Chassiselement (42) des Fahrzeugs befestigt zu sein, eine rechte Befestigungszone (5), die konzipiert ist, um an einem rechten Chassiselement (43) des Fahrzeugs befestigt zu sein, einen Querträger (6), der die linke Befestigungszone (4) mit der rechten Befestigungszone (5) verbindet, sowie eine linke Aufnahmezone (7) und eine rechte Aufnahmezone (8), die voneinander beabstandet und dazu bestimmt sind, jeweils für ein Lenkgehäuse (2), das konzipiert ist, um eine Lenkzahnstange in Verschiebung aufzunehmen und zu führen, eine Auflage zu bieten,
- ein erstes Modul (10), das von dem Sockel (3) getrennt ist, das einerseits einen ersten Abschnitt (2A) eines Lenkgehäuses (2) umfasst, das dazu bestimmt ist, eine erste Führungsauflage für die Zahnstange zu bieten, sowie ein erstes Lager (11), das mit dem ersten Abschnitt (2A) des Lenkgehäuses fest verbunden ist und eine erste Vertiefung (12) bildet, die eingerichtet ist, um eine Stabilisatorstange (13) aufnehmen und stützen zu können,
- ein zweites Modul (20), das von den Sockel (3) und dem ersten Modul (10) getrennt ist, wobei das zweite Modul (20) einerseits einen zweiten Abschnitt (2B) des Lenkgehäuses (2) umfasst, der dazu bestimmt ist, eine zweite Führungsauflage für die Zahnstange zu bieten, und andererseits ein zweites Lager (21), das mit dem zweiten Lenkgehäuseabschnitt (2B) fest verbunden ist, wobei das zweite Lager (21) eine zweite Vertiefung (22) bildet, die eingerichtet ist, um die Stabilisatorstange (13) aufnehmen und stützen zu können,
dann einen Zusammenbauschritt (b), in dessen Verlauf man einerseits das erste Modul (10) auf der linken Aufnahmezone (7) des Sockels (3) und andererseits das zweite Modul (20) auf der rechten Aufnahmezone (8) des Sockels anfügt und befestigt.

2. Verfahren nach Anspruch 1, **dadurch gekennzeichnet, dass** innerhalb des ersten Moduls (10) der erste Lenkgehäuseabschnitt (2A) und das erste Lager (11) gemeinsam aus einem Stück gefertigt sind, und/oder dadurch, dass innerhalb des zweiten Moduls (20) der zweite Lenkgehäuseabschnitt (2B) und das zweite Lager (21) gemeinsam aus einem Stück gefertigt sind.

3. Verfahren nach Anspruch 1 oder 2, **dadurch gekennzeichnet, dass** der erste Gehäuseabschnitt (2A) des ersten Moduls (10) eine erste Führungshülse (35) umfasst, die konzipiert ist, um von der Lenkzahnstange durchquert zu werden, um die Lenkzahnstange entlang einer Lenkachse (YY') in Verschiebung zu führen, und/oder dadurch, dass der zweite Gehäuseabschnitt (2B) des zweiten Moduls (20) eine zweite Führungshülse (50) umfasst, die konzipiert ist, um von der Lenkzahnstange durchquert zu werden, um die Lenkzahnstange in Verschiebung entlang der Lenkachse (YY') zu führen.

4. Verfahren nach einem der vorhergehenden Ansprüche, **dadurch gekennzeichnet, dass** der erste Gehäuseabschnitt (2A) des ersten Moduls (10) eine erste Führungshülse (35) umfasst, die konzipiert ist, um von der Lenkzahnstange durchquert zu werden, um die Lenkzahnstange entlang einer Lenkachse (YY') in Verschiebung zu führen, sowie eine Zugangshülse (36), die die Lenkachse (YY') schneidet und eingerichtet ist, um es einer Lenksäule, die mit einem Antriebsritzel versehen ist, zu erlauben, auf der Zahnstange zum Eingriff zu kommen, wobei die Führungshülse (35) und die Zugangshülse (36) bevorzugt aus einem Stück miteinander geformt sind.

5. Verfahren nach einem der vorhergehenden Ansprüche, **dadurch gekennzeichnet, dass** der Zusammenbauschritt (b) einen Unterschritt (b1) zur Rekonstitution des Lenkgehäuses umfasst, in dessen Verlauf man den ersten Gehäuseabschnitt (2A) des ersten Moduls (10) mit dem zweiten Gehäuseabschnitt (2B) des zweiten Moduls (20) mittels eines Schutzrohrs (40), das von dem Sockel getrennt ist, verbindet, und in dessen Innerem die Zahnstange derart gleiten soll, so dass ein ununterbrochenes Lenkgehäuse (2) von dem ersten Modul (10) bis zu dem zweiten Modul (20) rekonstituiert wird.

6. Verfahren nach Anspruch 5, **dadurch gekennzeichnet, dass** der Unterschritt (b1) zur Rekonstitution des Lenkgehäuses (2) vor einem Einsetzungsunterschritt (b2) auftritt, in dessen Verlauf man das erste Modul (10) und das zweite Modul (20), die vorab miteinander durch das Schutzrohr (40) verbunden wurden, auf ihrer jeweiligen linken (7) und rechten (8) Aufnahmezone anfügt und befestigt.

7. Verfahren nach Anspruch 5 oder 6 und nach einem der Ansprüche 3 oder 4, **dadurch gekennzeichnet, dass** man bei dem Unterschritt (b1) zur Rekonstitution des Lenkgehäuses die Vereinigung und die Verbindung des Schutzrohrs (40) mit der ersten Führungshülse (35), der zu dem ersten Modul (10) gehört, und/oder jeweils die Vereinigung und die Verbindung des Schutzrohrs (40) mit der zweiten Führungshülse (50), der zu dem zweiten Modul (20) gehört, sicherstellt, indem man das Schutzrohr (40) und die Führungshülse (35, 50) ineinander in der Verlängerung voneinander entlang der Lenkachse (YY') verschachtelt.

8. Verfahren nach einem der Ansprüche 5 bis 7, **dadurch gekennzeichnet, dass** man bei dem Unterschritt (b1) zur Rekonstitution des Lenkgehäuses mindestens eine der Verbindungen (41G, 41D) zwischen dem Schutzrohr (40) und einem der Gehäuseabschnitte (2A, 2B) eines der Module (10, 20), bevorzugt die Verbindung (41G) zwischen dem Schutzrohr (40) und dem ersten Gehäuseabschnitt (2A) des ersten Moduls (10) unter Wahren mindestens eines Freiheitsgrad zwischen dem Schutzrohr (40) und dem Modul (10, 20) ausführt, bevorzugt einen Freiheitsgrad in Verschiebung entlang der Lenkachse (YY') und/oder einen Freiheitsgrad in Drehung um die Lenkachse (YY'), so dass eine relative Beweglichkeit des Schutzrohrs (40) in Bezug auf das betreffende Modul (10, 20) gestattet wird, ohne die Kontinuität des Lenkgehäuses (2) zu unterbrechen.

9. Verfahren nach Anspruch 7 oder 8, **dadurch gekennzeichnet, dass** man bei dem Unterschritt (b1) zur Rekonstitution des Lenkgehäuses das Schutzrohr (40) mit der Führungshülse (35, 50) des betreffenden Moduls (10, 20) entlang der Lenkachse (YY') derart verschachtelt, dass eine Gleitführungsverbindung (41G, 41D) oder Gleit- und Drehzapfenverbindung entlang der Lenkachse (YY') gebildet wird.

10. Verfahren nach einem der Ansprüche 8 oder 9, **dadurch gekennzeichnet, dass** im Laufe des Unterschritts (b1) zur Rekonstitution des Lenkgehäuses das Schutzrohr (40) vorab fest durch eines seiner Enden (40D) mit einem der Module (10, 20), bevorzugt mit dem zweiten Modul (20), gemäß einer festen Verbindung, die das Schutzrohr (40) in unveränderter Position in Bezug zu dem Modul (20) hält, fest verbunden wird, bevor es anschließend durch sein entgegengesetztes Ende (40G) auf dem anderen Modul (10), bevorzugt dem ersten Modul (10), gemäß einer Verbindung (41G), die eine relative Beweglichkeit gestattet, eingebracht wird.

11. Verfahren nach einem der Ansprüche 5 bis 10, **dadurch gekennzeichnet, dass** man bei dem Vorfertigungsschritt (a) das Schutzrohr (40) aus einem Stück mit einem der Module (10, 20), bevorzugt mit dem zweiten Modul (20), fertigt.

12. Verfahren nach einem der Ansprüche 5 bis 11, **dadurch gekennzeichnet, dass**, da das Schutzrohr (40) anfänglich getrennt von einem der Module (10, 20), zum Beispiel getrennt von dem ersten Modul (10), gebildet wird, der Fertigungswerkstoff des Schutzrohrs (40) von dem Fertigungswerkstoff des Moduls (10, 20) unterschiedlich und bevorzugt weniger dicht ist als der Fertigungswerkstoff des Moduls (10, 20).

13. Verfahren nach einem der vorhergehenden Ansprüche, **dadurch gekennzeichnet, dass** das zweite Modul (20) aus einem Verbundwerkstoff gefertigt ist, der eine Matrix aus Polymerwerkstoff, der durch Fasern verstärkt ist, umfasst.

14. Verfahren nach einem der vorhergehenden Ansprüche, **dadurch gekennzeichnet, dass** das erste Modul (10) aus einer Leichtmetalllegierung, wie zum Beispiel einer Aluminiumlegierung oder einer Magnesiumlegierung, gefertigt ist.

15. Lenkgehäuse (2), das dazu bestimmt ist, in Verschiebung entlang einer Lenkachse (YY') ein Lenkungsbetätigungsorgan, wie zum Beispiel eine Zahnstange, aufzunehmen und zu führen, wobei das Lenkgehäuse (2) **dadurch gekennzeichnet ist, dass** es längs in einerseits ein erstes Modul (10) geteilt ist, das aus einem einzigen Stück aus einem ersten Werkstoff einen ersten Abschnitt (2A) eines Lenkgehäuses (2) umfasst, der konzipiert ist, um eine erste Führungsauflage des Lenkungsbetätigungsorgans zu bilden und dazu einen ersten Längenabschnitt entlang der Lenkachse (YY') abdeckt, sowie ein erstes Lager (11), das eine erste Vertiefung (12) bildet, die eingerichtet ist, um eine Stabilisatorstange (13) aufzunehmen und zu stützen, und andererseits ein zweites Modul (20), das aus einem einzigen Stück aus einem zweiten Werkstoff, der von dem ersten Werkstoff unterschiedlich ist, einen zweiten Abschnitt (2B) des Lenkgehäuses (2) umfasst, der konzipiert ist, um eine zweite Führungsauflage des Lenkungsbetätigungsorgans zu bilden, wobei sich der zweite Gehäuseabschnitt durch ein Schutzrohr (40) derart verlängert, dass ein zweiter Längenabschnitt entlang der Lenkrichtung (YY') abgedeckt ist, der den Längenabschnitt ergänzt, der von dem ersten Gehäuseabschnitt (2A) abgedeckt ist, sowie ein zweites Lager (21), das eine zweite Vertiefung (22) bildet, die eingerichtet ist, um die Stabilisatorstange (13) beabstandet von dem ersten Lager (11) aufzunehmen und zu stützen.

## Claims

1. A method for assembling a cradle (1) for a steering axle of a vehicle, said method comprising:
a prefabrication step (a), during which are separately realized:
- a base (3), which comprises a left stowage area (4) designed so as to be fastened to a left chassis element (42) of the vehicle, a right stowage area (5) designed so as to be fastened to a right chassis element (43) of the vehicle, a cross member (6) which joins the left stowage area (4) to the right stowage area (5), as well as a left receiving area (7) and a right receiving area (8) distant from each other and each intended to provide a bearing to a steering housing (2) designed for receiving and guiding in translation a steering rack,
- a first module (10), distinct from the base (3), which comprises, on the one hand, a first steering housing (2) segment (2A) intended to provide a first guide surface to the rack, as well as a first bearing (11) which is secured to said first steering housing segment (2A) and which forms a first depression (12) arranged so as to accommodate and support a stabilizer bar (13),
- a second module (20), distinct from the base (3) and from the first module (10), said second module (20) comprising, on the one hand, a second steering housing (2) segment (2B) intended to provide a second guide surface to the rack, and on the other hand, a second bearing (21) secured to said second steering housing segment (2B), said second bearing (21) forming a second depression (22) arranged so as to accommodate and support the stabilizer bar (13)
then, an assembly step (b), during which, on the one hand, the first module (10) is attached and fastened on the left receiving area (7) of the base (3) and, on the other hand, the second module (20) is attached and fastened on the right receiving area (8) of said base.

2. The method according to claim 1, **characterized in that**, within the first module (10), the first steering housing segment (2A) and the first bearing (11) are integrally manufactured, and/or **in that** within the second module (20), the second steering housing segment (2B) and the second bearing (21) are integrally manufactured.

3. The method according to claim 1 or 2, **characterized in that** the first steering housing segment (2A) of the first module (10) comprises a first guide sleeve (35) designed so as to be crossed by the steering rack in order to guide in translation said steering rack along a steering axis (YY'), and/or **in that** the second steering housing segment (2B) of the second module (20) comprises a second guide sleeve (50) designed so as to be crossed by the steering rack in order to guide in translation said steering rack along said steering axis (YY').

4. The method according to any of the preceding claims, **characterized in that** the first steering housing segment (2A) of the first module (10) comprises a first guide sleeve (35) designed so as to be crossed by the steering rack in order to guide in translation said steering rack along a steering axis (YY'), as well as an access sleeve (36), intersecting the steering axis (YY') and arranged to enable a steering column provided with a drive pinion to engage with said rack, the guide sleeve (35) and the access sleeve (36) being preferably formed integrally with each other.

5. The method according to any of the preceding claims, **characterized in that** the assembly step (b) comprises a steering housing reconstitution sub-step (b1) during which the first steering housing segment (2A) of the first module (10) is connected to the second steering housing segment (2B) of the second module (20) by means of a protection tube (40), which is distinct from the base and inside of which the rack is intended to slide, so as to reconstitute a continuous steering housing (2) from the first module (10) to the second module (20).

6. The method according to claim 5, **characterized in that** the steering housing (2) reconstitution sub-step (b1) takes place before a setting up sub-step (b2) during which the first module (10) and the second module (20), linked to each other beforehand by the protection tube (40), are attached and fastened on their respective left (7) and right (8) receiving areas.

7. The method according to claim 5 or 6 and according to any of claims 3 or 4, **characterized in that**, during the steering housing reconstitution sub-step (b1), the combination and junction of the protection tube (40) with the first guide sleeve (35) belonging to the first module (10), and/or respectively the combination and junction of said protection tube (40) with the second guide sleeve (50) belonging to the second module (20), are ensured by interlocking said protection tube (40) and said guide sleeve (35, 50) into each other, in the extension of each other along the steering axis (YY').

8. The method according to any of claims 5 to 7, **characterized in that**, during the steering housing reconstitution sub-step (b1), at least one of the junctions (41G, 41D) between the protection tube (40) and one of the steering housing segments (2A, 2B) of one of the modules (10, 20) is performed, preferably the junction (41G) between the protection tube (40) and the first steering housing segment (2A) of the first module (10), by maintaining at least one degree of freedom between said protection tube (40) and the module (10, 20), preferably one degree of freedom in translation along the steering axis (YY') and/or one degree of freedom in rotation about said steering axis (YY'), so as to allow for a relative mobility of the protection tube (40) relative to the considered module (10, 20) without breaking the continuity of the steering housing (2).

9. The method according to claim 7 or 8, **characterized in that**, during the steering housing reconstitution sub-step (b1), the protection tube (40) is interlocked with the guide sleeve (35, 50) of the considered module (10, 20) along the steering axis (YY'), so as to form a sliding or sliding-pivot junction (41G, 41D) along said steering axis (YY').

10. The method according to any of claims 8 or 9, **characterized in that**, during the steering housing reconstitution sub-step (b1), the protection tube (40) is secured beforehand by one of its ends (40D) to one of the modules (10, 20), preferably to the second module (20), according to a fixed junction which holds said protection tube (40) in a fixed position with respect to said module (20), prior to being engaged afterwards, by its opposite end (40G), on the other module (10), preferably the first module (10), according to a junction (41G) which allows a relative mobility.

11. The method according to any of claims 5 to 10, **characterized in that**, during the prefabrication step (a), the protection tube (40) is manufactured integrally with one of the modules (10, 20), preferably with the second module (20).

12. The method according to any of claims 5 to 11, **characterized in that**, as the protection tube (40) is initially formed separately from at least one of the modules (10, 20), for example separately from the first module (10), the constituent material of said protection tube (40) is different from the constituent material of said module (10, 20), and preferably less dense than said constituent material of said module (10, 20).

13. The method according to any of the preceding claims, **characterized in that** the second module (20) is made of a composite material comprising a polymer material matrix reinforced with fibers.

14. The method according to any of the preceding claims, **characterized in that** the first module (10) is made of a light metal alloy, such as an aluminum alloy or a magnesium alloy.

15. A steering housing (2) intended to accommodate and guide in translation, along a steering axis (YY'), a steering actuating member, such as a rack, said steering housing (2) being **characterized in that** it is longitudinally split, on the one hand, into a first module (10) which comprises, integrally in a first material, a first steering housing (2) segment (2A) which is designed so as to form a first guide surface of the steering actuating member, and which covers, for this purpose, a first length portion along the steering axis (YY'), as well as a first bearing (11) forming a first depression (12) arranged so as to be able to accommodate and support a stabilizer bar (13), and on the other hand, into a second module (20) which comprises, integrally in a second material different from the first material, a second steering housing (2) segment (2B) which is designed to form a second guide surface of the steering actuating member, said second steering housing segment extending by a protection tube (40) so as to cover a second length portion along the steering axis (YY') which completes the length portion covered by the first steering housing segment (2A), as well as a second bearing (21) forming a second depression (22) arranged to be able to accommodate and support the stabilizer bar (13) at a distance from the first bearing (11).
